# EUROPÄISCHE PATENTSCHRIFT

(11) **EP 1 777 089 B1**
(45) Veröffentlichungstag und Bekanntmachung des Hinweises auf die Patenterteilung: **26.08.2009**
(21) Anmeldenummer: 06019159.0
(22) Anmeldetag: 13.09.2006
(51) Int. Cl.: B60H 1/34

(54) **Kraftfahrzeug-Belüftungsanordnung**
Vehicle venting device
Appareil d'aération de véhicule

(30) Priorität: 18.10.2005 DE 102005050131
(43) Veröffentlichungstag der Anmeldung: 25.04.2007
(73) Patentinhaber: Behr GmbH & Co. KG, 70469 Stuttgart (DE)
(72) Erfinder: Benamira, Salah, Dipl.-Ing., 70180 Stuttgart (DE); Feith, Thomas, Dipl.-Ing., 70825 Korntal-Münchingen (DE)

(56) Entgegenhaltungen:
- WO-A-20/05021301
- DE-A1-102004 011 352
- DE-A1-102004 038 016

## Beschreibung

Die Erfindung betrifft eine Belüftungsanordnung für ein Kraftfahrzeug gemäß dem Oberbegriff des Anspruches 1, eine Instrumententafel eines Kraftfahrzeugs gemäß dem Oberbegriffs des Anspruches 6, und ein Kraftfahrzeug.

Aus der DE 10 2004 038 016 A1 die als nächstliegender Stand der Technik angesehen wird, ist ein Luftausströmer bekannt, welcher auch als eine Komfortdüse, d.h. als eine Düse mit Verstellmöglichkeiten zwischen einem Spotstrahl und diffuser Luftströmung, bezeichnet wird. Hierbei wird der Luftstrom in Teilluftströme unterteilt und die einzelnen Teilluftströme bedarfsgerecht umgelenkt. Ein derartiger Luftausströmer bietet zwar einen hohen Komfort, jedoch baut er relativ groß, so dass er häufig nicht oder zumindest nicht ohne Einschränkungen, welche sich auf den Komfort im Fahrzeuginnenraum auswirken, als Teil der Belüftungsanordnung in das Armaturenbrett integriert werden kann, wobei üblicherweise vier derartige Luftausströmer die Belüftungsanordnung bilden.

Bei herkömmlichen Kraftfahrzeugen sind in die Instrumententafel in der Regel vier Luftausströmer vorgesehen, welche keine Diffusstellung aufweisen, wobei je zwei Luftausströmer dem Fahrer und zwei dem Beifahrer zugeordnet sind. Die Luftausströmer sind jeweils seitlich nach außen versetzt, so dass der Fahrer oder Beifahrer maximal schräg angeströmt oder der (Haupt-)Luftstrahl am Fahrer oder Beifahrer vorbeigelenkt wird. Eine derartige Anordnung der Luftausströmer lässt noch Wünsche in Hinblick auf den Komfort von Fahrer und Beifahrer offen.

Ausgehend von diesem Stand der Technik ist es Aufgabe der Erfindung, eine verbesserte Belüftungsanordnung zur Verfügung zu stellen. Diese Aufgabe wird gelöst durch eine Belüftungsanordnung mit den Merkmalen des Anspruchs 1, durch eine Instrumententafel mit den Merkmalen des Anspruchs 6, und durch ein Kraftfahrzeug mit den Merkmalen des Anspruchs 8. Vorteilhafte Ausgestaltungen sind Gegenstand der Unteransprüche.

Erfindungsgemäß ist eine Belüftungsanordnung für ein Kraftfahrzeug, insbesondere den Frontbereich eines Kraftfahrzeugs, aufweisend mehrere Düsen, vorgesehen, wobei diese mindestens zwei Spotdüsen und mindestens zwei Dralldüsen aufweist. Durch das Auftrennen von Komfortdüsen in Spot- und Dralldüsen lässt sich die Bautiefe deutlich verringern. Ebenfalls lässt sich die Höhe der Düsen dadurch verringern, dass die einzelnen Düsen in einer Reihe angeordnet sind, wobei diese breiter als üblich ausgebildet sein können. Die Anordnung in einer Reihe über die gesamte Instrumententafel hat ferner optische Vorteile. Sonstige Einbauten in der Instrumententafel können ober- oder unterhalb der Düsen angeordnet sein.

Vorzugsweise ist mindestens eine der Spotdüsen, insbesondere bevorzugt sämtliche Spotdüsen, bezüglich der Strahlrichtung einstellbar, wobei der Luftstrahl vorzugsweise durch eine der Düse zugeordnete Klappe regelbar ist.

Die Dralldüsen bewirken vorzugsweise, dass dem Luftstrahl einen Drall auferlegt wird, so dass dieser sich direkt nach dem Austritt aus der Dralldüse aufweitet, und/oder dass der Luftstrahl breit aufgefächert wird, so dass die Luft nicht als gebündelter Strahl aus der Düse austritt.

Vorzugsweise ist mindestens eine Spotdüse und/oder insbesondere bevorzugt mindestens eine Dralldüse in die Fahrer- und/oder Beifahrertüre integriert. Diese Düse ist bevorzugt auf der gleichen Höhe wie die anderen Düsen angeordnet, so dass ein ansprechendes Design möglich ist und die Reihe der Düsen in der Instrumententafel im Bereich der Türen zumindest ein Stück weit fortgesetzt wird.

Die Belüftungsanordnung weist vorzugsweise neben den Spot- und Dralldüsen mindestens eine Komfortdüse auf. Diese ist bevorzugt auf der Fahreraußenseite, d.h. im schmalen Bereich der Instrumententafel neben dem Lenkrad, angeordnet. In diesem Bereich ist in der Breite relativ wenig Bauraum vorhanden, jedoch gibt es in die Tiefe ausreichend Raum, so dass hier in der Regel Komfortdüsen verwendet werden können.

Die fahreraußenseitig angeordneten Düsen sind vorzugsweise über einen Seitenkanal mit der Klimaanlage verbunden, während die mittigen und beifahreraußenseitigen Düsen über einen gemeinsamen Verteilerkanal mit der Klimaanlage verbunden sind. An Stelle eines Verteilerkanals ist jedoch auch eine Ausgestaltung in Form eines Mittelkanals und eines zweiten Seitenkanals möglich.

Im Folgenden wird die vorliegende Erfindung anhand zweier Ausführungsbeispiele mit Varianten, teilweise unter Bezugnahme auf die Zeichnung, näher erläutert. Es zeigen:
- Fig. 1: eine schematische perspektivische Darstellung einer Instrumententafel mit eingebautem Belüftungssystem gemäß dem ersten Ausführungsbeispiel,
- Fig. 2: einen Schnitt durch die Instrumententafel von Fig. 1,
- Fig. 3: einen Schnitt durch eine Instrumententafel gemäß einer ersten Ausführungsform,
- Fig. 4: einen Schnitt durch die Instrumententafel gemäß einer zweiten Ausführungsform,
- Fig. 5: eine schematische perspektivische Darstellung einer Instrumententafel mit eingebautem Belüftungssystem gemäß dem ersten Ausführungsbeispiel,
- Fig. 6: eine schematische Darstellung des Frontbereichs eines Kraftfahrzeugs mit eingebautem Belüftungssystem gemäß dem zweiten Ausführungsbeispiel, und
- Fig. 7a-c: verschiedene Ausführungsformen von Düsen.

Gemäß dem ersten Ausführungsbeispiel ist eine Kraftfahrzeug-Belüftungsanordnung 1 vorgesehen, welche zwei unterschiedliche Typen von Düsen aufweist. So sind zum Einen Spotdüsen 2, durch welche die Luft in einem gerichteten Strahl ausströmt, der in seiner Richtung und Stärke vom entsprechenden Insassen einstellbar ist, und zum Anderen Dralldüsen 3 aufweist, durch welche die Luft diffus austritt, d.h. für den entsprechenden Insassen kaum merklich ihm frische Luft zuführt.

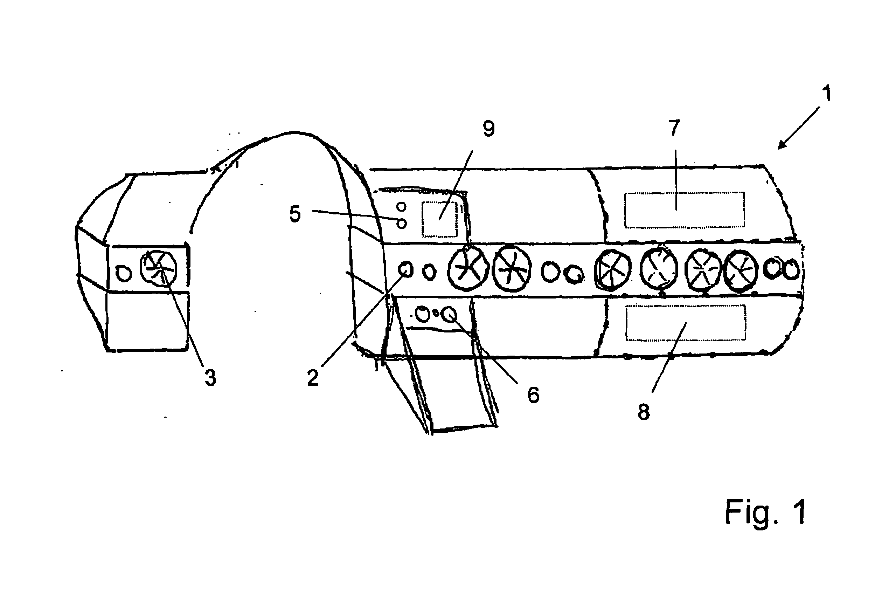

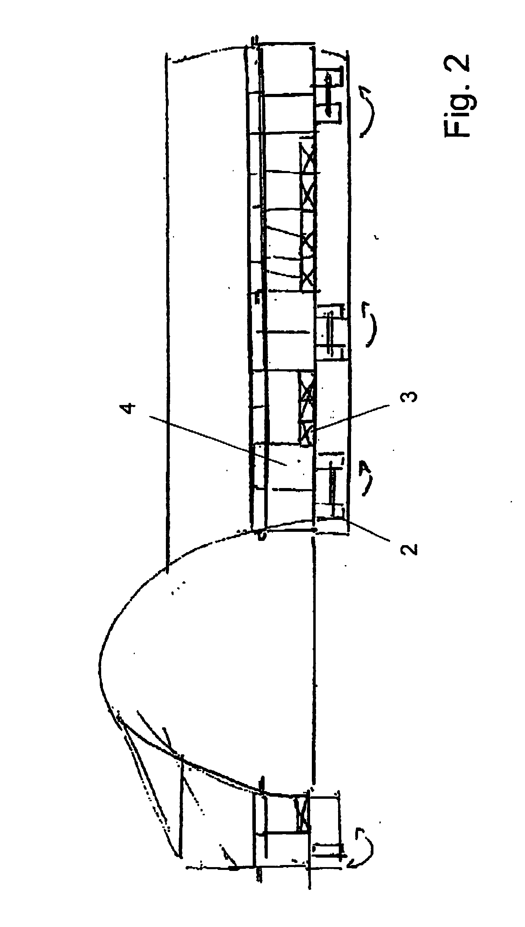

Wie in den Figuren 1 und 2 dargestellt, sind vorliegend sieben Spotdüsen 2 und ebenfalls sieben Dralldüsen 3 in einer ca. 5 cm hohen Reihe über die gesamte Breite der Instrumententafel angeordnet vorgesehen, wobei bauraumbedingt auf der Fahreraußenseite vorliegend jeweils nur eine Spotdüse 2 und eine Dralldüse 3 vorgesehen ist. Die mit Hilfe von Klappen 4 geregelten Spotdüsen 2 sind - abgesehen von der Spotdüse 2 auf der Fahreraußenseite - jeweils in Zweiergruppen angeordnet. Die Zweiergruppen haben vorliegend eine gemeinsame Kinematik zur Einstellung der Spotstrahlen. Zwischen den Spotdüsen 2 sind die Dralldüsen 3 verteilt, wobei vorliegend eine Zweiergruppe nahe der Mittelkonsole und eine Vierergruppe frontal vor dem Beifahrer angeordnet sind. Die sonstigen Einbauten in der Instrumententafel, wie beispielsweise Anzeigen 5, Betätigungselemente 6 für die Klimaanlage o. ä., Airbag 7, Handschuhfach 8 oder Bildschirm 9 für ein GPS-System, sind ober- und unterhalb der Reihe von Spotdüsen 2 und Dralldüsen 3 angeordnet.

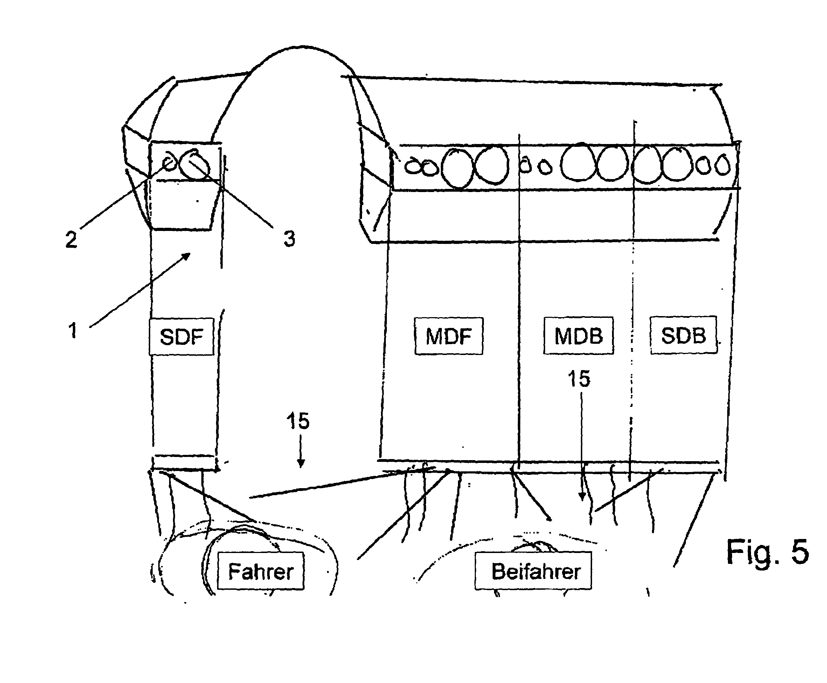

In Fig. 5 ist schematisch die Zuordnung der Düsen zu den jeweiligen Fahrzeuginnenraumbereichen dargestellt. Die fahreraußenseitigen Düsen 2 und 3 sind als Seitenbelüftungsdüsen (SDF) für die Fahrerseite vorgesehen. Entsprechend sind die Düsen 2 und 3 der äußeren Beifahrerseite als Seitenbelüftungsdüsen (SDB) für die Beifahrerseite ausgebildet. Die dazwischen liegenden Düsen bilden die Mitteldüsen bzw. Belüftdungsdüsen für den Fahrerbereich (MDF) sowie den Beifahrerbereich (MDB).

Gemäß einer nicht in der Zeichnung dargestellten Variante ist - zur Behebung des besagten Bauraumproblems in die Breite auf der Fahreraußenseite - an Stelle der Spotdüse 2 und der Dralldüse 3 eine einzige Komfortdüse, beispielsweise eine Komfortdüse, wie sie in der DE 10 2004 038 016 A1 beschrieben ist, vorgesehen. Dies ist möglich, da an dieser Stelle ausreichend Bauraum in die Tiefe, d.h. in normaler Fahrtrichtung des Fahrzeugs, gegeben ist, was jedoch in den anderen Bereichen der Instrumententafel nicht der Fall ist, so dass kürzer bauende Düsen verwendet werden.

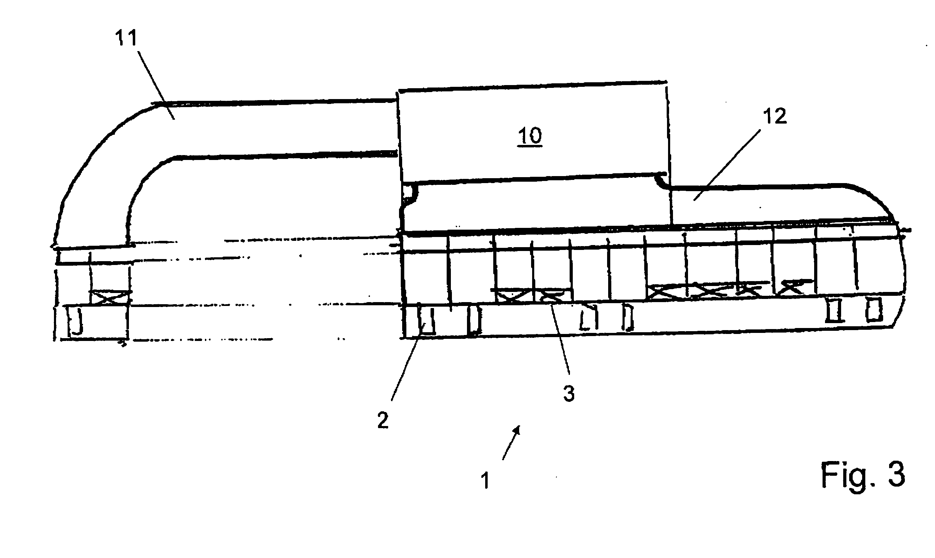

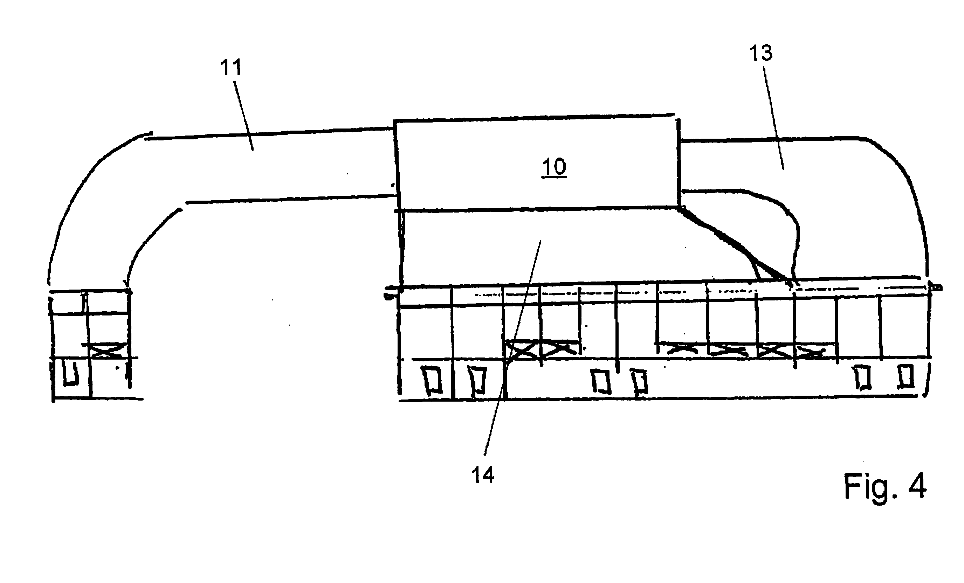

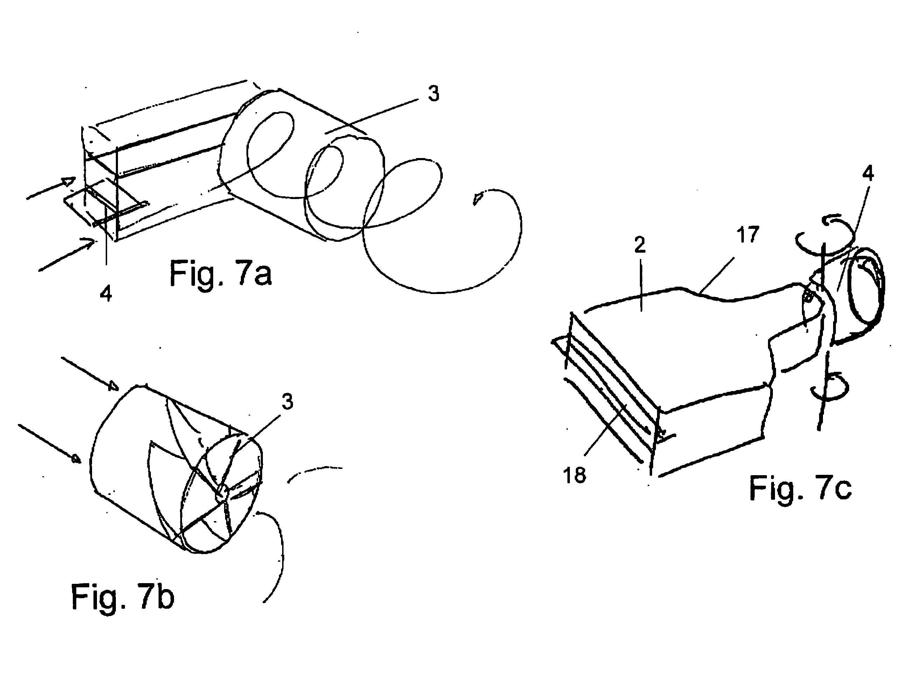

In den Figuren 3 und 4 sind zwei Ausführungsformen für die Verbindung der Düsen 2 und 3 mit der Klimaanlage, im Folgenden mit dem Bezugszeichen 10 versehen, dargestellt. Die Verbindung zwischen Klimaanlage 10 und den fahreraußenseitigen Düsen 2 und 3 oder ggf. auch einer Komfortdüse und/oder Düsen in der Fahrertüre, erfolgt in beiden beispielhaft dargestellten Fällen über einen Seitenkanal 11, der seitlich abzweigt. Die übrigen Düsen 2 und 3 sind gemäß der ersten Ausführungsform über einen gemeinsamen Verteilerkanal 12 mit der Klimaanlage 10 verbunden, wobei der Verteilerkanal 12 derart ausgebildet ist, vorliegend mit Hilfe von Luftleitelementen, dass eine gleichmäßige Luftverteilung auf die Düsen 2 und 3 möglich ist. Insbesondere im beifahreraußenseitigen Endbereich erfolgt eine sehr schräge Anströmung, welche eine starke Umlenkung des Luftstroms erfordert, während im mittleren Bereich eine gerade Zuströmung erfolgt, so dass vorteilhafterweise unterschiedliche Dralldüsen 3 verwendet werden, welche jeweils an die entsprechende Anströmung angepasst sind und den geraden, gebündelten Luftstrom verwirbeln und auffächem, so dass der Luftaustritt für die Insassen nicht mehr als Strahl erkennbar ist. Dralldüsen 3, wie sie hierfür geeignet sind, sind in den Figuren 7a und 7b dargestellt, auf welche an späterer Stelle näher eingegangen wird. Ein Beispiel einer Spotdüse 2 ist in Fig. 7c dargestellt.

Gemäß der zweiten Ausführungsform ist, wie bei normalen Klimaanlagen üblich, eine Aufteilung in einen zweiten Seitenkanal 13 und einen Mittelkanal 14 vorgesehen, wobei die Kanäle 13 und 14 sehr flach und relativ breit ausgebildet sind. Vorliegend versorgt der zweite Seitenkanal 13 die beiden äußersten Spotdüsen 2 sowie die äußerste Dralldüse 3, während die restlichen, mehr im mittleren Bereich angeordneten Düsen 2 und 3 über den Mittelkanal 14 versorgt werden. Je nach Bauraumerfordernis kann die Kanalführung und Versorgung der einzelnen Düsen auch auf andere Weise erfolgen, bspw. können auch die beiden äußersten Dralldüsen über den zweiten Seitenkanal versorgt werden.

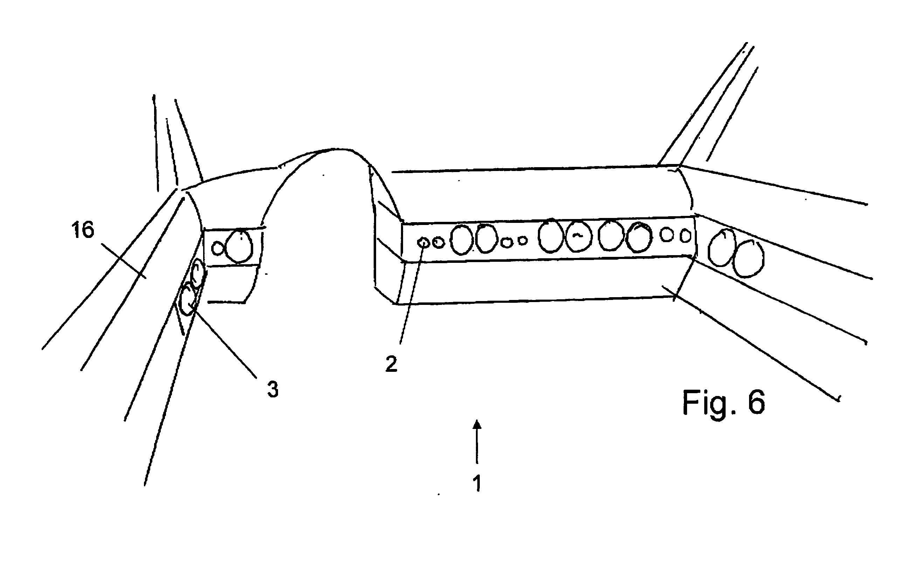

Fig. 6 zeigt ein zweites Ausführurigsbeispiel einer Belüftungsanordnung 1, welche - sofern nachfolgend nicht näher beschrieben - der Belüftungsanordnung des ersten Ausführungsbeispiels entspricht. Hierbei ist die Belüftungsanordnung 1 seitlich erweitert, d.h. die Reihe der Düsen 2 und 3 setzt sich in den Türen 16 des Fahrers und Beifahrers direkt anschließend an die Instrumententafel und in gleicher Höhe fort, wofür die entsprechenden Luftkanäle bis in die Türen 16 geführt werden. Hierbei sind vorliegend je zwei Dralldüsen 3 nebeneinander in jeder der Türen 16 in der Nähe der Schwenkachse angeordnet.

Die Düsenreihe kann auch weiter nach hinten bis in den Fondbereich fortgesetzt werden. Hinter den Frontsitzen kann die Düsenreihe jedoch über andere Kanäle, welche dem Fondbereich zugeordnet sind, mit der Klimaanlage verbunden sein, so dass eine zonenentsprechende Belüftung und Temperierung möglich ist.

Fig. 7a zeigt eine Dralldüse 3 mit seitlicher Anströmung, wobei eine Klappe zur Regelung des durch die Dralldüse 3 dem Fahrzeuginnenraum zugeführten Massenstroms im Anströmkanal vorgesehen ist. Die Dralldüse 3 versetzt die Luft in eine Schraubbewegung, so dass sie mit einem starken Drall beaufschlagt austritt und sich sofort diffus verteilt.

Bei der Dralldüse 3, die in Fig. 7b dargestellt ist, erfolgt die Anströmung in Richtung der Längsachse der Düse. Durch vorliegend vier schraubenförmig angeordnete Trennwände wird die Luft in eine Schraubbewegung gezwungen, so dass sie - entsprechend der Dralldüse 3 von Fig. 7a - mit einem starken Drall beaufschlagt austritt und sich sofort diffus verteilt.

Fig. 7c zeigt eine Spotdüse 2, welche den Luftstrahl, der über die Klappe 4 in seiner Stärke geregelt wird, in einer Art Trichter 17 aufweitet und in einem Bereich mit konstantem Querschnitt gleichrichtet. Die Strahlrichtung wird mittels eines herkömmlichen, nach oben, unten sowie seitlich verstellbaren Grills 18 bedarfsgerecht von Hand eingestellt. In weiteren Varianten kann die Strahlrichtung auch mit einem in mindestens zwei zueinender senkrechten Ebenen oder einem dreidimensional verstellbaren Ausströmer eingestellt werden. Auch unterschiedliche Kombinationen aus einem verschwenkbaren Ausströmer, beispielsweise einem in einer Ebene verschwenkbaren Ausströmer und konventionellen verschwenkbaren Lamellenanordnungen oder Grills sind möglich.

## Patentansprüche

1. Belüftungsanordnung für ein Kraftfahrzeug, insbesondere den Frontbereich eines Kraftfahrzeugs, aufweisend mehrere Düsen (2, 3), wobei die Belüftungsanordnung (1) mindestens zwei Spotdüsen (2) und mindestens zwei Dralldüsen (3) aufweist, **dadurch gekennzeichnet, dass** die einzelnen Spotdüsen (2) und Dralldüsen (3) getrennt voneinander ausgebildet sind.

2. Belüftungsanordnung nach einem der vorhergehenden Ansprüche, **dadurch gekennzeichnet, dass** mindestens eine der Spotdüsen (2) bezüglich der Strahlrichtung einstellbar ist.

3. Belüftungsanordnung nach einem der vorhergehenden Ansprüche, **dadurch gekennzeichnet, dass** der Luftstrahl durch die Spotdüse (2) über mindestens eine Klappe (4) geregelt ist.

4. Belüftungsanordnung nach einem der vorhergehenden Ansprüche, **dadurch gekennzeichnet, dass** die Dralldüse (3) dem Luftstrahl einen Drall auferlegt, so dass dieser sich direkt nach dem Austritt aus der Dralldüse (3) aufweitet, und/oder den Luftstrahl breit auffächert.

5. Belüftungsanordnung, nach einem der vorhergehenden Ansprüche, **dadurch gekennzeichnet, dass** die Belüftungsanordnung (1) mindestens eine Komfortdüse aufweist.

6. Instrumententafel eines Kraftfahrzeugs mit einer Belüftungsanordnung nach einem der Ansprüche 1 bis 5, **dadurch gekennzeichnet, dass** die Spotdüsen (2) und Dralldüsen (3) in einer Reihe in der Instrumententafel des Kraftfahrzeugs angeordnet sind.

7. Instrumententafel eines Kraftfahrzeugs nach Anspruch 6, **dadurch gekennzeichnet, dass** weitere Einbauten (5, 6, 7, 8, 9) in der Instrumententafel ober- oder unterhalb der Spotdüsen (2) und Dralldüsen (3) angeordnet sind.

8. Kraftfahrzeug, insbesondere Kraftfahrzeug mit einer Klimaanlage, **gekennzeichnet durch** mindestens eine Belüftungsanordnung (1) nach einem der Ansprüche 1 bis 5 oder eine Instrumententafel nach einem der Ansprüche 6 bis 7.

9. Kraftfahrzeug nach Anspruch 8, **dadurch gekennzeichnet, dass** die fahreraußenseitig angeordneten Düsen über einen Seitenkanal mit der Klimaanlage verbunden sind, und dass die mittigen und beifahreraußenseitigen Düsen über einen Verteilerkanal mit der Klimaanlage verbunden sind.

10. Kraftfahrzeug nach Anspruch 9, **dadurch gekennzeichnet, dass** mindestens eine Spotdüse (2) und/oder mindestens eine Dralldüse (3) in die Fahrer- und/oder Beifahrertüre integriert ist.

11. Kraftfahrzeug nach Anspruch 10, **dadurch gekennzeichnet, dass** die Dralldüse (3) in der Fahrer- oder Beifahrertüre auf gleicher Höhe wie die anderen Düsen (2, 3) angeordnet sind.

12. Kraftfahrzeug nach Anspruch 8, **dadurch gekennzeichnet, dass** die Komfortdüse auf der Fahreraußenseite angeordnet ist.

## Claims

1. Ventilation arrangement for a motor vehicle, in particular for the front region of a motor vehicle, comprising a plurality of air outlets (2, 3), the ventilation arrangement (1) including at least two spot nozzles (2) and two swirl nozzles (3), **characterised in that** the individual spot nozzles (2) and swirl nozzles (3) are separate from one another.

2. Ventilation arrangement according to any of the preceding claims, **characterised in that** at least one of the spot nozzles (2) is adjustable in terms of its direction of air jet.

3. Ventilation arrangement according to any of the preceding claims, **characterised in that** the air jet through the spot nozzle (2) is controlled by means of at least one damper (4).

4. Ventilation arrangement according to any of the preceding claims, **characterised in that** the swirl nozzle (3) adds a swirl to the air jet, causing it to spread immediately after being discharged from the swirl nozzle (3), and/or **in that** it fans out the air jet.

5. Ventilation arrangement according to any of the preceding claims, **characterised in that** the ventilation arrangement (1) includes at least one comfort nozzle.

6. Instrument panel of a motor vehicle with a ventilation arrangement according to any of claims 1 to 5, **characterised in that** the spot nozzles (2) and the swirl nozzles (3) are arranged in a row on the instrument panel of the motor vehicle.

7. Instrument panel of a motor vehicle according to claim 6, **characterised in that** further in-dash components (5, 6, 7, 8, 9) are disposed above or below the spot nozzles (2) and the swirl nozzles (3) in the instrument panel.

8. Motor vehicle, in particular motor vehicle with an air conditioning system, **characterised by** at least one ventilation arrangement (1) according to any of claims 1 to 5 or by an instrument panel according to any of claims 6 to 7.

9. Motor vehicle according to claim 8, **characterised in that** the air outlets located on the outside of the driver are connected to the air conditioning system via a side duct, and **in that** the central air outlets and the air outlets on the outside of the front seat passenger are connected to the air conditioning system via a distributor duct.

10. Motor vehicle according to claim 9, **characterised in that** at least one spot nozzle (2) and/or at least one swirl nozzle (3) is/are integrated into the driver or passenger door.

11. Motor vehicle according to claim 10, **characterised in that** the swirl nozzle (3) in the driver or passenger door is positioned at the same level as the other nozzles (2, 3).

12. Motor vehicle according to claim 8, **characterised in that** the comfort nozzle is located on the outside of the driver.

## Revendications

1. Dispositif de ventilation pour un véhicule automobile, en particulier pour la zone avant d'un véhicule automobile, présentant plusieurs buses (2, 3), où le dispositif de ventilation (1) présente au moins deux buses à jet dirigé (2) et au moins deux buses à effet tourbillonnant (3),
**caractérisé en ce que** les différentes buses à jet dirigé (2) et à effet tourbillonnant (3) sont configurées en étant séparées les unes des autres.

2. Dispositif de ventilation selon la revendication 1, **caractérisé en ce qu'**au moins l'une des buses à jet dirigé (2) est réglable par rapport à la direction du jet.

3. Dispositif de ventilation selon l'une ou l'autre des revendications précédentes, **caractérisé en ce que** le jet d'air à travers la buse à jet dirigé (2) est réglé par au moins un volet (4).

4. Dispositif de ventilation selon l'une quelconque des revendications précédentes, **caractérisé en ce que** la buse à effet tourbillonnant (3) impose un tourbillon au jet d'air, si bien que celui-ci s'élargit directement en sortant de la buse à effet tourbillonnant (3), et / ou le jet d'air s'ouvre largement en éventail.

5. Dispositif de ventilation selon l'une quelconque des revendications précédentes, **caractérisé en ce que** le dispositif de ventilation (1) présente au moins une buse de confort.

6. Tableau de bord d'un véhicule automobile comprenant un dispositif de ventilation selon l'une quelconque des revendications 1 à 5, **caractérisé en ce que** les buses à jet dirigé (2) et les buses à effet tourbillonnant (3) sont disposées sur une rangée dans le tableau de bord du véhicule automobile.

7. Tableau de bord d'un véhicule automobile selon la revendication 6, **caractérisé en ce que** d'autres éléments encastrés (5, 6, 7, 8, 9) sont disposés, dans le tableau de bord, au-dessus ou au-dessous des buses à jet dirigé (2) et des buses à effet tourbillonnant (3).

8. Véhicule automobile, en particulier véhicule automobile comprenant un système de climatisation, **caractérisé par** au moins un dispositif de ventilation (1) selon l'une quelconque des revendications 1 à 5 ou bien par un tableau de bord selon l'une ou l'autre des revendications 6 et 7.

9. Véhicule automobile selon la revendication 8, **caractérisé en ce que** les buses disposées extérieurement par rapport au conducteur sont raccordées au système de climatisation, par un conduit latéral, et **en ce que** les buses centrales et celles disposées extérieurement par rapport au passager sont raccordées au système de climatisation, par un conduit de distribution.

10. Véhicule automobile selon la revendication 9, **caractérisé en ce qu'**au moins une buse à jet dirigé (2) et / ou au moins une buse à effet tourbillonnant (3) est intégrée à la porte du conducteur et / ou du passager.

11. Véhicule automobile selon la revendication 10, **caractérisé en ce que** les buses à effet tourbillonnant (3) sont disposées, dans la porte du conducteur ou du passager, à la même hauteur que les autres buses (2, 3).

12. Véhicule automobile selon la revendication 8, **caractérisé en ce que** la buse de confort est disposée extérieurement par rapport au conducteur.
